# EUROPÄISCHE PATENTSCHRIFT

(11) **EP 0 618 110 B1**
(45) Veröffentlichungstag und Bekanntmachung des Hinweises auf die Patenterteilung: **18.12.1996**
(21) Anmeldenummer: 94103737.6
(22) Anmeldetag: 11.03.1994
(51) Int. Cl.: B60R 21/20

(54) **Armaturentafel mit Beifahrer-Airbag**
Dashboard with passenger air-bag
Tableau de bord avec air-bag pour passager

(30) Priorität: 01.04.1993 DE 4310636
(43) Veröffentlichungstag der Anmeldung: 05.10.1994
(73) Patentinhaber: YMOS AKTIENGESELLSCHAFT Industrieprodukte, D-63179 Obertshausen (DE)
(72) Erfinder: Dangelmaier, Hans Dieter, Dipl.-Ing., D-63179 Obertshausen (DE)
(74) Vertreter: Schieferdecker, Lutz, Dipl.-Ing.

(56) Entgegenhaltungen:
- EP-A- 0 235 383
- EP-A- 0 358 230
- EP-A- 0 367 319
- EP-A- 0 415 362
- DE-A- 3 433 941
- DE-A- 3 545 028
- DE-A- 4 139 010

## Beschreibung

Die Erfindung betrifft eine Armaturentafel mit Beifahrer-Airbag für ein Kraftfahrzeug sowie mit weiteren Merkmalen gemäß dem Oberbegriff des Patentanspruches 1.

Eine gattungsgemäße Armaturentafel ist aus EP-A2-0 415 362 bekannt und umfaßt ein das Airbag-Modul aufnehmendes Airbag-Fach in einem Frontteil. Abgedeckt ist das Airbag-Fach mit Hilfe eines bündig in dem aus Kunststoff bestehenden Frontteil angeordneten Deckelelementes. Dieses Deckelelement besteht aus nach oben und nach unten wegklappenden, sich mittig öffnenden Deckelhälften, die ferner an metallischen Konsolen mit Hilfe von clipartigen Befestigungselementen gehalten sind. Diese Befestigungselemente weisen Sollbruchstellen auf, die beim Aufblähen des Airbag reißen und ein Wegklappen der Deckelhälften gestatten.

Eine weitere Armaturentafel mit Beifahrer-Airbag und einem das Airbag-Fach verschließenden Deckelelement ist aus der EP-A2-0 358 230 bekannt. Diese Schrift stellt einen Stand der Technik nach Art. 54(3) und (4) EPÜ dar. Hier weist das Deckelelement an seinem einen Ende eine Halterippe auf, die über einen geschwächten Querschnitt mit dem eigentlichen Deckelteil einstückig verbunden ist. Im geschlossenen Zustand liegt die Halterippe in einem randseitigen Hinterschnitt des aus Kunststoff bestehenden Frontteiles. Beim Aufblähen des Airbag reißt entweder die Halterippe ab oder sie gleitet aus dem Hinterschnitt heraus und gibt dadurch das Deckelelement frei.

Zur Erzeugung der gegebenenfalls als Sollbruchstelle wirkenden Stelle mit geschwächtem Querschnitt ist ein die Rückseite des Deckelelementes bildendes Blech entsprechend gekürzt. Es endet vor der Sollbruchstelle. Das Blech kann aus Aluminium bestehen, dient zur Herstellung der notwendigen Steifigkeit des Deckelelementes und kann zu diesem Zweck auch Versteifungssicken aufweisen.

Auch für das aus zwei Hälften bestehende und aus der EP-A2-0 415 362 bekannte Deckelelement gilt, daß jeweils die Rückseite aus Festigkeitsgründen aus einer Metallplatte besteht, in der die mit Sollbruchstellen versehenen Befestigungselemente verankert sind.

Der Erfindung liegt die Aufgabe zugrunde, Maßnahmen vorzusehen, damit auch ein ausschließlich aus Kunststoff bestehendes, das Airbag-Fach verkleidendes Deckelelement einfach herzustellen und in sinnvoller sowie zweckmäßiger Weise befestigt werden kann.

Zur Lösung dieser Aufgabe sieht die Erfindung mit den Merkmalen des Anspruches 1 vor, daß das aus Kunststoff bestehende Frontteil eine Durchtrittsöffnung für jedes deckelseitig angeordnete Befestigungselement aufweist und daß das Befestigungselement zwei im Abstand voneinander angeordnete Haltefinger, einen deren freie Enden verbindenden Steg und einen sich vom Steg parallel zu und zwischen den Haltefingern erstreckenden Rastfinger mit einer Rastnase umfaßt und daß eine zugehörige Rastfläche armaturentafelseitig angeordnet ist.

Die Haltefinger und der sie verbindende Steg sowie der sich zwischen den Haltefingern vom Steg weg erstreckende Rastfinger bewirken, daß das Befestigungselement in der Draufsicht in wesentlichen E-förmig ist. Aufgrund der Rastnase am Rastfinger und einer armaturentafelseitig angeordneten Rastfläche besitzt das Befestigungselement eine clipartige Funktion. Auf Druck rastet es von alleine ein und stellt daher eine Verbindung von zwei Teilen her.

Das clipartige Befestigungselement ist ein zum Deckelelement gehörendes Teil und kann zusammen mit diesem einstückig ausgebildet sein. Bei einem Unfall löst sich das Deckelelement aus seiner Verankerung und gibt den Weg für den Airbag innerhalb von Bruchteilen einer Sekunde frei.

Das Öffnen des Airbag-Faches erfolgt vorzugsweise mit Hilfe von Sollbruchstellen, die am Befestigungselement angeordnet sind und die das Deckelelement beim normalen Betrieb sicher und zuverlässig halten. Bei einem Unfall werden sie schlagartig zerstört, wenn der Luftsack im Inneren der Armaturentafel sich ausdehnt. Das Deckelelement platzt bei sich vergrößerndem Airbag aus der Öffnung des Airbag-Faches heraus, ohne daß hierbei zusätzliche mechanische Elemente wirksam werden müßten.

Weitere Merkmale der Erfindung gehen aus Unteransprüchen im Zusammenhang mit der Beschreibung und der Zeichnung hervor.

Die Erfindung wird nachstehend anhand von Ausführungsbeispielen, die in der Zeichnung dargestellt sind, näher beschrieben. Dabei zeigen:
- Fig. 1:: schematisch einen Schnitt durch eine abgebrochene Armaturentafel mit einem ein Airbagmodul aufnehmenden Airbag-Fach;
- Fig. 2:: in kleinerem Maßstab eine schematische Darstellung eines Deckelelementes mit zwei clipartigen Befestigungselementen;
- Fig. 3:: abgebrochen sowie zum Teil im Schnitt und in anderem Maßstab eine Ansicht des Befestigungselementes in Richtung X in Fig. 1;
- Fig. 4:: schematisch sowie abgebrochen eine Einzelheit des an der Armaturentafel befestigten Deckelelementes;
- Fig. 5:: schematisch sowie abgebrochen eine Einzelheit nach dem Lösen des Deckelelementes von der Armaturentafel nach einem Bruch der Sollbruchstellen;
- Fig. 6:: eine Ansicht wie in Fig. 3 nach dem Bruch der Sollbruchstellen;
- Fig. 7:: in größerem Maßstab eine Einzelheit aus Fig. 1;
- Fig. 8:: abgebrochen sowie im Schnitt eine Draufsicht auf das Befestigungselement;
- Fig. 9:: einen Schnitt längs der Linie IX-IX in Fig. 8;
- Fig. 10:: einen Schnitt längs der Linie X-X in Fig. 8;
- Fig. 11:: eine Ansicht wie in Fig. 3 von einem abgewandelten Ausführungsbeispiel;
- Fig. 12:: in größerem Maßstab eine Ansicht wie in Fig. 7 von einem weiteren Ausführungsbeispiel und
- Fig. 13:: eine Ansicht wie in Fig. 4 von dem Ausführungsbeispiel gemäß Fig. 12.

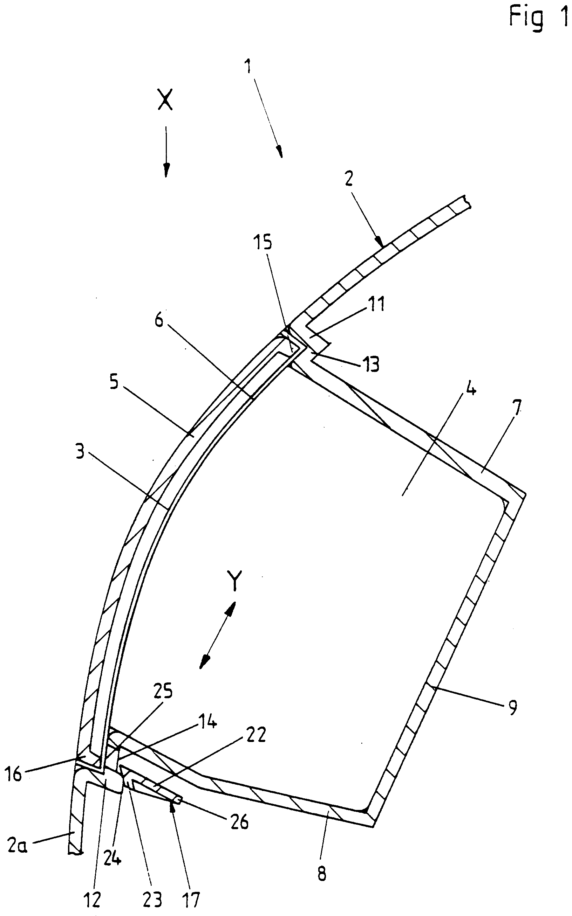

Eine für ein Kraftfahrzeug bestimmte, aus Kunststoff bestehende Armaturentafel 1 mit einem Beifahrer-Airbag umfaßt ein Frontteil 2 mit einer Öffnung 3 und einem Airbag-Fach 4 (taschenförmige Ausnehmung), das zur Aufnahme eines in den Figuren nicht dargestellten Airbagmoduls dient. Zur Abdeckung des Airbag-Faches 4 und zum Verschließen der Öffnung 3 im Frontteil 2 dient ein Deckelelement 5. Aus optischen und sicherheitstechnischen Gründen ist das Deckelelement 5 z.B. bündig abschließend in dem Frontteil 2 der Armaturentafel 1 angeordnet und liegt dazu in einer passenden Vertiefung 6. Schematisch sowie im Schnitt geht dies aus Fig. 1 hervor.

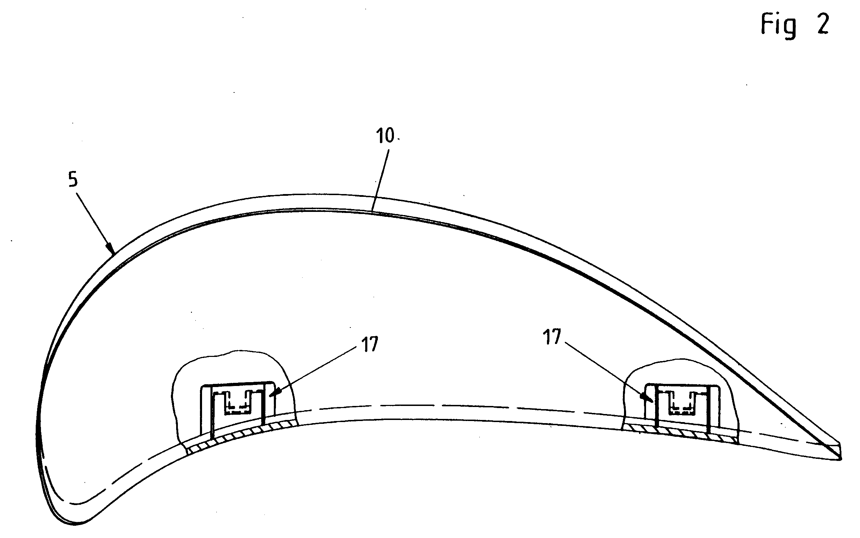

Zur Begrenzung des Airbag-Faches 4 sind Wandstücke 7, 8 sowie ein Boden 9 vorgesehen. Sie bilden gemeinsam ein Fach, dessen Kontur deckungsgleich oder annähernd deckungsgleich mit der Kontur 10 des Deckelelementes 5 gemäß Fig. 2 ist.

Die Wandstücke 7 und 8 gehen jeweils mit einem, einen Vorsprung bildenden Absatz 11 bzw. 12 in das Frontteil 2 über. Hierzu sind Randteile 13 und 14 vorgesehen, auf denen ferner das Deckelelement 5 mit Randelementen 15 und 16 im zusammengebauten Zustand gemäß Fig. 1 aufliegt. Gemäß einer bevorzugten Ausführungsform sind die zum Boden 9 hin vorstehenden Randelemente 15 und 16 umlaufend angeordnet und bilden ein gemeinsames Randelement.

Zur Befestigung des Deckelelementes 5 am Frontteil 2 der Armaturentafel 1 ist mindestens ein clipartiges, mit dem Frontteil 2 verrastendes Befestigungselement 17 vorgesehen. Dieses Befestigungselement 17 ist am Deckelelement 5 angeordnet, wobei dies vorzugsweise einstückig sein kann.

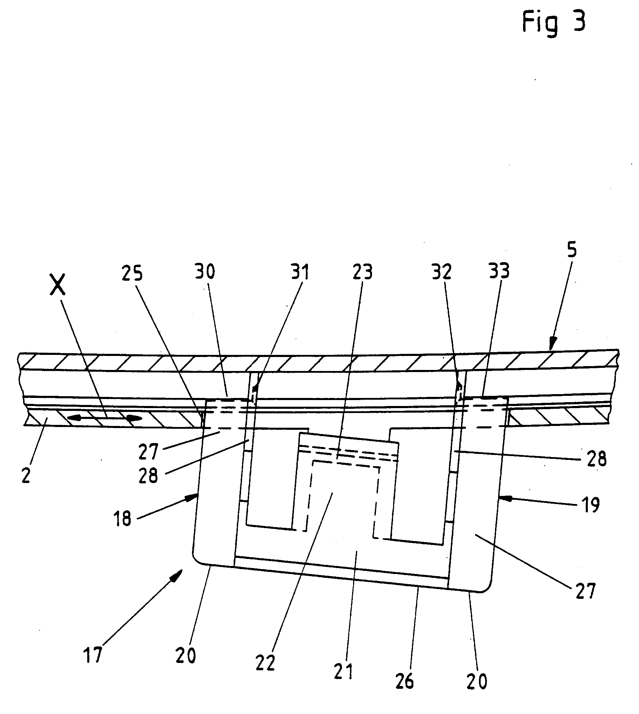

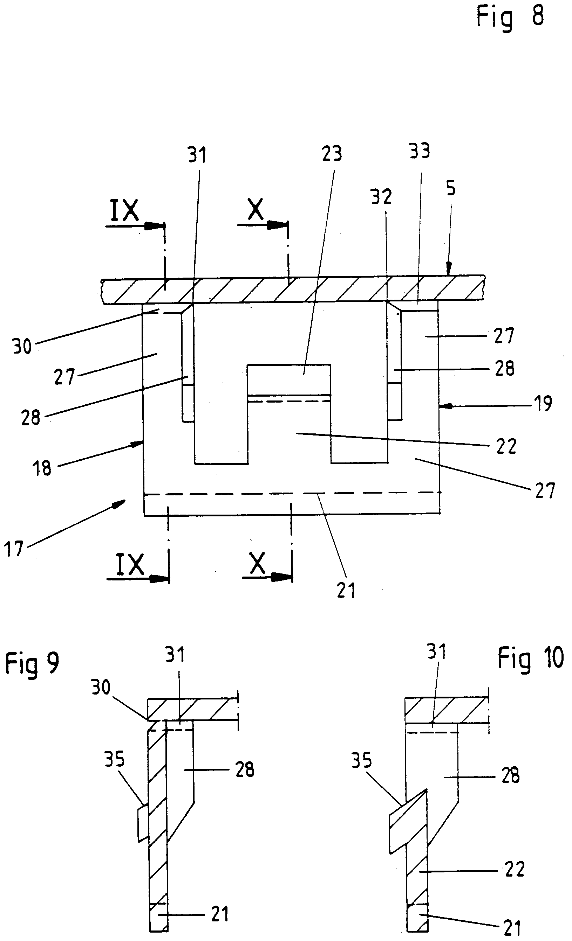

Das Befestigungselement 17 umfaßt gemäß den Figuren 3 und 8 zwei im Abstand voneinander angeordnete Haltefinger 18 und 19, einen deren freie Enden 20 verbindenden Steg 21 und einen vom Steg 21 sich parallel zu und zwischen den Haltefingern 18, 19 erstreckenden Rastfinger 22 mit einer Rastnase 23, der eine Rastfläche 24 an der Armaturentafel 1 bzw. an deren Frontteil 2 zugeordnet ist. Bei dieser Rastfläche 24 handelt es sich gemäß Ausführungsbeispiel konkret um eine dem Deckelelement 5 abgewandte Fläche an dem Absatz 12, der sich zwischen dem Wandstück 8 des Airbag-Faches 4 und einem Teil 2a des Frontteiles 2 befindet.

Ferner weist das zu dem Absatz 12 gehörende Randteil 14 je eine Durchtrittsöffnung 25 für jedes Befestigungselement 17 auf.

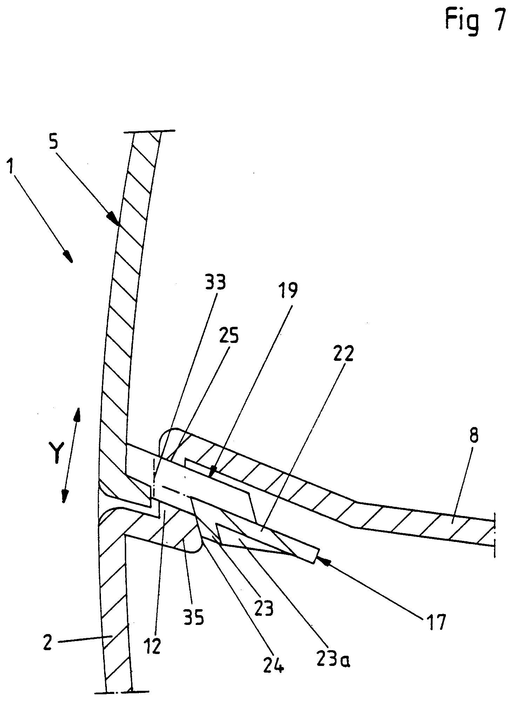

Wie vor allem Fig. 1 zeigt, läßt sich das Befestigungselement 17 mit seinem stegseitigen Ende 26 durch die Durchtrittsöffnung 25 hindurchschieben, bis die Rastnase 23 hinter dem Absatz 12 an der Rastfläche 24 anliegt (Fig. 1 bzw. 7). Das Deckelelement 5 erreicht gleichzeitig die gewünschte Einbaulage gemäß Fig. 1.

Wie ferner Fig. 2 zeigt, befinden sich mehrere Befestigungselemente 17 am Umfang des Deckelelementes 5 und sichern dieses dadurch in der gewünschten Lage.

Der Querschnitt der beiden Haltefinger 18, 19 ist gemäß dem in den Figuren 1 bis 10 dargestellten Ausführungsbeispiel etwa L-förmig. Sie bestehen je aus einem sich in den Figuren 3 und 8 in der Blattebene erstreckenden Schenkel 27 und einem sich dazu senkrecht erstreckenden Schenkel 28.

Die Befestigung des Befestigungselementes 17 am Deckelelement 5 erfolgt unmittelbar an Sollbruchstellen 30, 31 und 32, 33. Diese Sollbruchstellen 30 bis 33 sind Sollbruchlinien aufgrund ihrer Länge.

Die beiden Sollbruchlinien 30 und 33 verbinden die beiden Schenkel 27 der beiden Haltefinger 18, 19 mit dem Deckelelement 5 und die beiden Sollbruchlinien 31 und 32 verbinden die beiden anderen Schenkel 28 der beiden Haltefinger 18, 19 mit dem Deckelelement 5. Zum Lösen des Deckelelementes 5 aus seiner Befestigung an der Armaturentafel 1 ist es daher erforderlich, daß sämtliche Sollbruchstellen bzw. Sollbruchlinien 30 bis 33 im Bereich der jeweiligen Schenkel 27 und 28 der beiden Haltefinger 18 und 19 durchtrennt werden.

Der Rastfinger 21 des Befestigungselementes 17 erstreckt sich mit seinem freien, die Rastnase 23 tragenden Ende vom Steg 21 zum Deckelelement 5 hin, wie dies auch aus einem Vergleich der Figuren 1 und 3 oder 7, 8 hervorgeht.

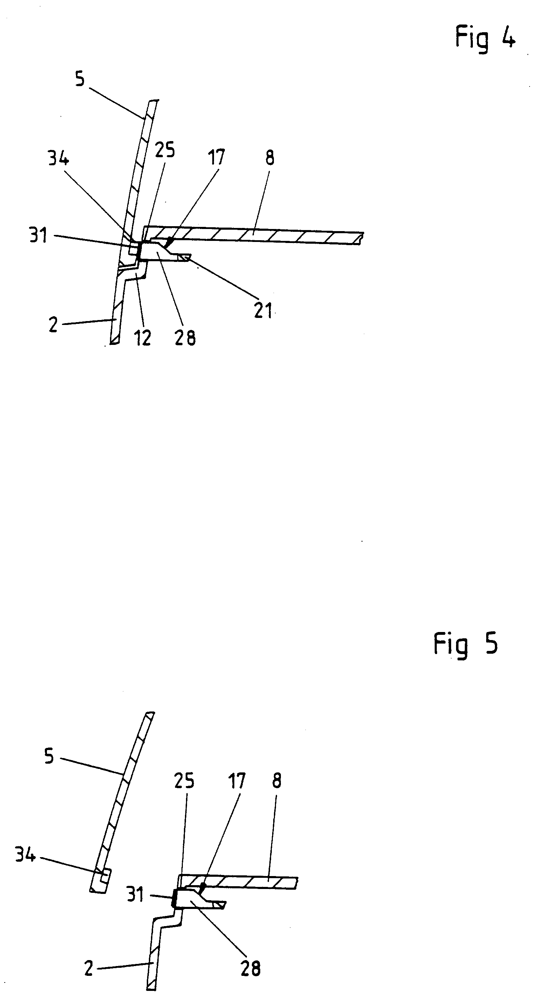

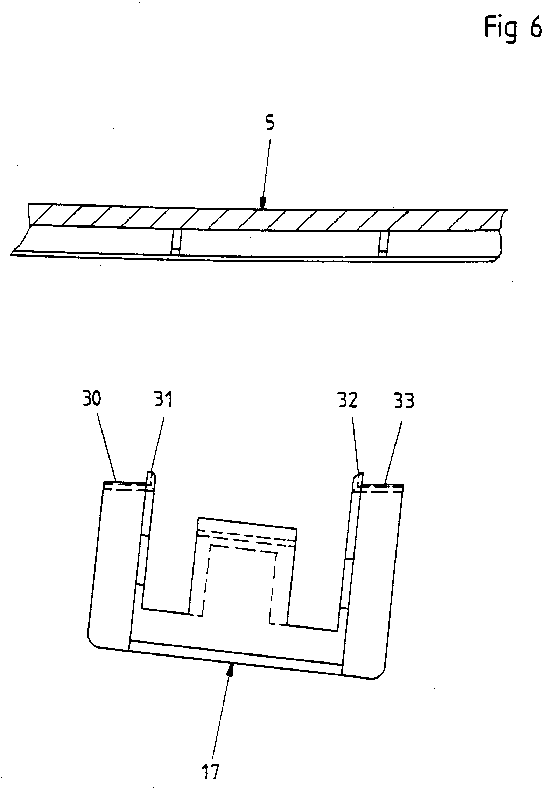

Die beiden Figuren 5 und 6 zeigen die Situation nach dem Lösen des Deckelelementes 5 vom Befestigungselement 17.

Um zu erreichen, daß die Befestigungselemente 17 dem Deckelelement 5 einen sicheren und spielfreien Sitz in der Vertiefung 6 geben, liegen die Haltefinger 18 und 19 zumindest mit ihren Schenkeln 18 in X-Richtung gemäß Fig. 3 und/oder in Y-Richtung gemäß Fig. 7 formschlüssig in der bzw. den Durchtrittsöffnungen 25. Beim Einstecken in die Durchtrittsöffnung 25 führen die Haltefinger 18, 19 das Befestigungselement 17, wobei der Rastfinger 22 mit seiner Rastnase 23 zunächst ausweicht, wozu an der Unterseite des Rastfingers 22 eine Auflaufschräge 23a gemäß Fig. 7 vorgesehen ist. Erst wenn die Rastnase 23 den Raum hinter dem Absatz 12 erreicht hat, legt sie sich an die Rastfläche 24, wie dies in Fig. 7 dargestellt ist. Das Deckelelement 5 ist von diesem Augenblick an gesichert.

Wenn sich bei einem Unfall das Deckelelement 5 von dem Befestigungselement 17 im Bereich der Sollbruchstellen/-linien 30 bis 33 löst, so bleiben die Haltefinger 18, 19 dennoch in der Durchtrittsöffnung 25, da sie durch den Rastfinger 22 und den verbindenden Steg 21 daran gehindert werden, sich ebenfalls in Öffnungsrichtung zu bewegen.

Die beiden Figuren 4 und 5 zeigen schließlich noch, daß am Deckelelement 5 ein Ansatz 34 angeordnet sein kann, der unmittelbar als Träger für das Befestigungselement 17 dient bzw. an dem das Befestigungselement 17 mit seinen Sollbruchstellen 30 bis 33 angeordnet ist. Die beiden Figuren 5 und 6 zeigen dabei ferner die Situation nach dem Bruch im Bereich der Sollbruchstellen 30 bis 33.

Damit der Rastfinger 22 mit seiner Rastnase 23 durch die Durchtrittsöffnung 25 treten kann und sich sodann an die Rastfläche 24 anlegt, ist er federelastisch und mit seiner wirksamen Rastfläche 35 zur Durchtrittsöffnung 25 versetzt angeordnet, wie aus Fig. 7 hervorgeht.

Auch die Figuren 8 bis 10 zeigen deutlich die Lage der Sollbruchstellen bzw. Sollbruchlinien 30 bis 33 an den jeweiligen Schenkeln 27 und 28 der Haltefinger 18 und 19.

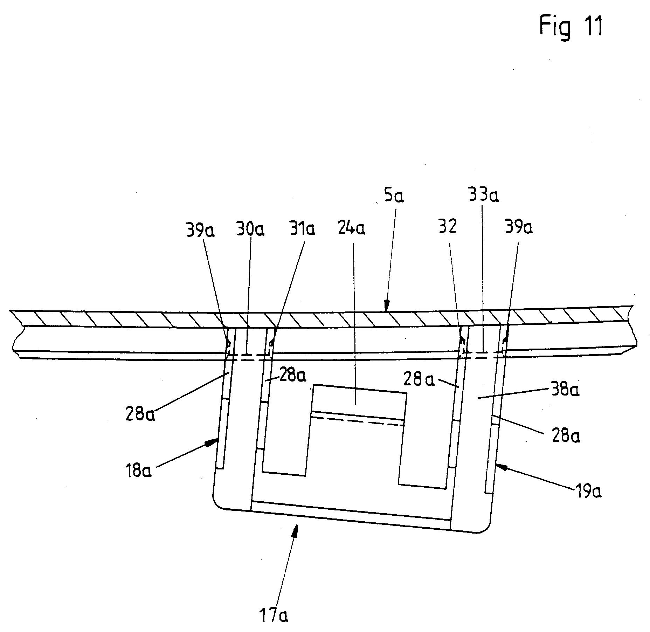

Die Fig. 11 zeigt eine geringfügig abgewandelte Ausführungsform von einem Befestigungselement 17a. Es unterscheidet sich von dem zuerst beschriebenen Ausführungsbeispiel nur dadurch, daß die Haltefinger 18a und 19a im Querschnitt nicht L-förmig, sondern U-förmig sind. Sie weisen je einen Steg 38a und jeweils zwei Schenkel 28a anstelle eines einzigen, sich in Y-Richtung erstreckenden Schenkels 28 gemäß dem zuerst beschriebenen Ausführungsbeispiel auf. Entsprechend ist an jedem Haltefinger 18a bzw. 19a eine weitere Sollbruchstelle bzw. Sollbruchlinie 39a vorgesehen, wie aus Fig. 11 hervorgeht.

Bei dem Befestigungselement 17a gemäß Fig. 11 weisen übereinstimmende bzw. gleiche Teile dieselben Bezugszahlen auf wie sie bei dem zuerst beschriebenen Befestigungselement 17 verwendet wurden. Lediglich der Buchstabenindex a ist bei übereinstimmenden Teilen hinzugefügt.

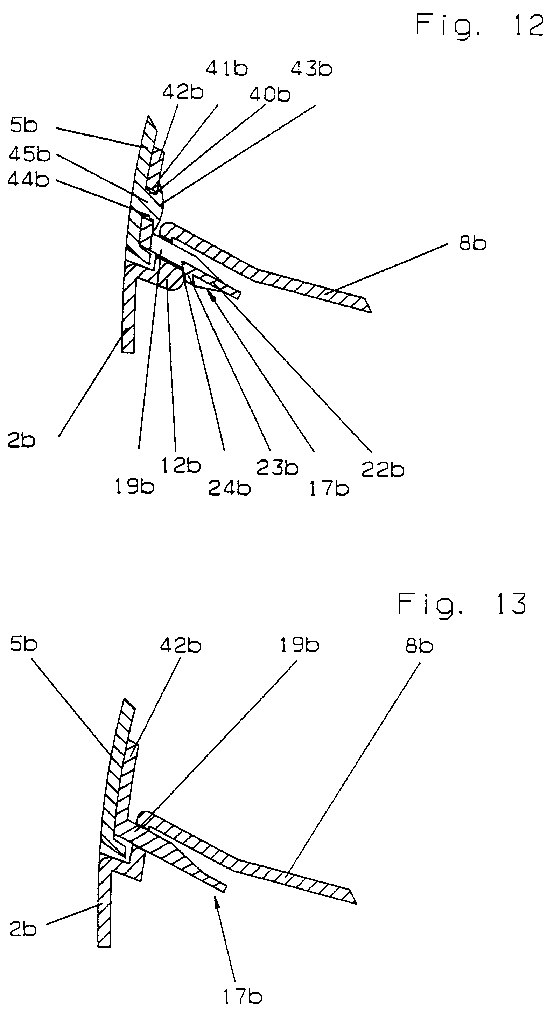

Ein weiteres Ausführungsbeispiel ist in den Figuren 12 und 13 dargestellt und weist für übereinstimmende Teile dieselben Bezugszahlen mit dem unterscheidenden Buchstabenindex b auf.

Während das zum Befestigen des Deckelelementes 5 am Frontteil 2 dienende Befestigungselement 17 bzw. 17a bei den in den Figuren 1 bis 11 dargestellten Ausführungsbeispielen einstückig mit dem Deckelelement 5 bzw. 5a verbunden ist, betrifft die Ausführungsform gemäß den Figuren 12 und 13 ein Befestigungselement 17b, das ein gesondertes Teil ist und seinerseits am Deckelelement 5b gemäß der Darstellung in Fig. 12 fixiert ist. Hierzu dient mindestens ein Halteelement 40b, das z.B. eine Durchtrittsöffnung 41b im Befestigungselement 17b durchgreift und hintergreift und dadurch dem Befestigungselement 17b einen sicheren und festen Halt am Deckelelement 5b verleiht.

Gemäß dem in Fig. 12 dargestellten Ausführungsbeispiel befindet sich die Durchtrittsöffnung 41b in einem innen am Deckelelement 5b anliegenden Schenkel 42b. Das Halteelement 40b ist pilzförmig und hintergreift mit seinem Kopf 43b den Schenkel 42b. Besonders zweckmäßig ist es, wenn das Halteelement 40b einstückig mit dem Deckelelement 5b verbunden ist.

Gemäß Ausführungsbeispiel weist das Halteelement 40b eine Sollbruchstelle 44b auf, die bricht, wenn sich der Luftsack des Airbag-Moduls füllt und das Deckelelement 5b wegdrückt.

Die am Halteelement 40b vorgesehene Sollbruchstelle oder Sollbruchlinie 44b befindet sich im zusammengebauten Zustand an einer schwer zugänglichen Stelle und insbesondere gemäß Ausführungsbeispiel im Inneren der deckelseitig angeordneten Durchtrittsöffnung 41b des Schenkels 42b des Halteelementes 17b. Vorzugsweise ist sie an dem stielartigen Zwischenstück 45b angeordnet, das den Kopf 43b mit dem Deckelelement 5b verbindet.

Alle anderen Teile des in den Figuren 12 und 13 dargestellten Ausführungsbeispieles stimmen mit dem zuerst beschriebenen Ausführungsbeispiel identisch oder nahezu identisch überein. Dies gilt insbesondere für das Wandstück 8b und den Absatz 12b, für den Rastfinger 22b und seine Rastnase 23b mit der Rastfläche 24b, wie dies in Fig. 12 dargestellt ist. Ein Unterschied zwischen dem Befestigungselement 17b und den beiden zuerst beschriebenen Befestigungselementen 17 bzw. 17a besteht allerdings insofern, als das Befestigungselement 17b keine Sollbruchstellen oder Sollbruchlinien im Bereich der beiden Haltefinger entsprechend dem Haltefinger 19b aufweist. An dem Befestigungselement 17b befindet sich somit keine Sollbruchstelle. Sie ist an dem das Befestigungselement 17b haltenden Halteelement 40b angeordnet.

## Patentansprüche

1. Armaturentafel mit Beifahrer-Airbag für ein Kraftfahrzeug, wobei mindestens ein das Airbag-Modul aufnehmendes Airbag-Fach (4) in einem Frontteil (2, 2b)angeordnet ist und ein das Airbag-Fach (4) verkleidendes Deckelelement (5, 5a) vorgesehen und mit Hilfe von mindestens einem, mindestens eine zugeordnete Sollbruchstelle aufweisenden Befestigungselement (17, 17a, 17b) armaturentafelseitig gehalten ist, dadurch gekennzeichnet, daß das aus Kunststoff bestehende Frontteil (2, 2b) eine Durchtrittsöffnung (25) für jedes deckelseitig angeordnete Befestigungselement (17, 17a, 17b) aufweist, und daß das Befestigungselement (17, 17a, 17b) zwei im Abstand voneinander angeordnete Haltefinger (18 bzw. 18a, 19 bzw. 19a, 19b), einen deren freie Enden (20) verbindenden Steg (21) und einen sich vom Steg (21) parallel zu und zwischen den Haltefingern (18 bzw. 18a, 19 bzw. 19a, 19b) erstreckenden Rastfinger (22, 22b)mit einer Rastnase (23, 23b) umfaßt, und daß eine zugehörige Rastfläche (24, 24a, 24b) armaturentafelseitig angeordnet ist.

2. Armaturentafel nach Anspruch 1, dadurch gekennzeichnet, daß die Sollbruchstellen (30 bzw. 30a bis 33a, 39a) unmittelbar in einstückiger Ausbildung das Befestigungselement (17, 17a) mit dem Deckelteil (5, 5a) verbinden.

3. Armaturentafel nach Anspruch 1 und einem oder mehreren der vorhergehenden Unteransprüche, dadurch gekennzeichnet, daß mehrere Befestigungselemente (17, 17a) am Deckelelement (5, 5a) angeordnet sind und daß ihre Durchtrittsöffnungen (25) am Rand des Airbag-Faches (4) angeordnet sind.

4. Armaturentafel nach Anspruch 1 und einem oder mehreren der vorhergehenden Unteransprüche, dadurch gekennzeichnet, daß die Solibruchstellen (30 bis 33 bzw. 30a bis 33a, 39a) an den Haltefingern (18, 18a bzw. 19, 19a) angeordnet sind.

5. Armaturentafel nach Anspruch 1 und einem oder mehreren der vorhergehenden Unteransprüche, dadurch gekennzeichnet, daß die Haltefinger (18, 19) einen L-förmigen Querschnitt aufweisen und daß die Solibruchstellen (30 bis 31) an jedem Schenkel (27, 28) des im Querschnitt L-förmigen Haltefingers (18, 19) angeordnet sind.

6. Armaturentafel nach Anspruch 1 und einem oder mehreren der vorhergehenden Unteransprüche, dadurch gekennzeichzeichnet, daß die Haltefinger (18a, 19a) im Querschnitt U-förmig sind und daß je ein Steg (38a) und Schenkel (28a) U-förmig angeordnet und entsprechende Sollbruchstellen (30a bis 33a und 39a) vorgesehen sind.

7. Armaturentafel nach Anspruch 1 und einem oder mehreren der vorhergehenden Unteransprüche, dadurch gekennzeichnet, daß zur bündigen Aufnahme des Deckelelementes (5, 5a) jeweils Wandstücke (7, 7a) des Airbag-Faches (4) mit Vorsprünge bildenden Absätzen (11, 12) in das Frontteil (2) übergehen, wobei ferner Randteile (13 und 14) vorgesehen sind und daß die Durchtrittsöffnung (25) für das Befestigungselement (17, 17a) in dem Randteil (14) angeordnet ist.

8. Armaturentafel nach Anspruch 1 und einem oder mehreren der vorhergehenden Unteransprüche, dadurch gekennzeichnet, daß das Befestigungselement (17b) mit Hilfe von mindestens einem clipartigen Halteelement (40b) an dem Deckelelement (5b) befestigt ist, wobei die Sollbruchstelle das Halteelement (40b) mit dem Deckelelement (5b) verbindet.

9. Armaturentafel nach Anspruch 1 und einem oder mehreren der vorhergehenden Unteransprüche, dadurch gekennzeichnet, daß das Befestigungselement (17b) deckelseitig eine Durchtrittsöffnung (41b) für das Halteelement (40b) aufweist und daß die Sollbruchstelle (44b) am Halteelement (40b) verdeckt im Inneren der Durchtrittsöffnung (41b) angeordnet ist.

10. Armaturentafel nach Anspruch 1 und einem oder mehreren der vorhergehenden Unteransprüche, dadurch gekennzeichnet, daß das Halteelement (40b) pilzförmig ist und daß das den Kopf (43b) des Halteelementes (40b) tragende, stielartige Zwischenstück (45b) die Sollbruchstelle (44b) aufweist.

## Claims

1. A dashboard with passenger airbag for a motor vehicle, wherein at least one airbag compartment (4) which accommodates the airbag module is arranged in a front portion (2, 2b) and there is provided a cover element (5, 5a) which covers the airbag compartment (4) and which is held at the dashboard side by means of at least one fixing element (17, 17a, 17b) having at least one associated desired-rupture location, characterised in that the front portion (2, 2b) which comprises plastics material has a through opening (25) for each fixing element (17, 17a, 17b) arranged at the cover side, and that the fixing element (17, 17a, 17b) includes two spaced-apart holding fingers (18 and 18a, 19 and 19a, 19b respectively), a web portion (21) connecting the free ends (20) thereof, and a retaining finger (22, 22b) with a retaining projection (23, 23b), the retaining finger extending from the web portion (21) parallel to and between the holding fingers (18 and 18a, 19 and 19a, 19b) respectively, and that an associated retaining surface (24, 24a, 24b) is arranged at the dashboard side.

2. A dashboard according to claim 1 characterised in that the desired-rupture locations (30 and 30a to 33a, 39a) connect the fixing element (17, 17a) to the cover member (5, 5a) directly in an integral configuration.

3. A dashboard according to claim 1 and one or more of the preceding appendant claims characterised in that a plurality of fixing elements (17, 17a) are arranged on the cover element (5, 5a) and that their through openings (25) are arranged at the edge of the airbag compartment (4).

4. A dashboard according to claim 1 and one or more of the preceding appendant claims characterised in that the desired-rupture locations (30 to 33 and 30a to 33a, 39a) are arranged on the holding fingers (18, 18a and 19, 19a respectively).

5. A dashboard according to claim 1 and one or more of the preceding appendant claims characterised in that the holding fingers (18, 19) are of an L-shaped cross-section and that the desired-rupture locations (30 to 31) are arranged on each limb (27, 28) of the holding finger (18, 19) of L-shaped cross-section.

6. A dashboard according to claim 1 and one or more of the preceding appendant claims characterised in that the holding fingers (18a, 19a) are of U-shaped cross-section and that a respective web portion (38a) and limb (28a) are arranged in a U-shape and corresponding desired-rupture locations (30a to 33a and 39a) are provided.

7. A dashboard according to claim 1 and one or more of the preceding appendant claims characterised in that for receiving the cover element (5, 5a) in flush relationship respective wall portions (7, 7a) of the airbag compartment (4) are joined with steps (11, 12) forming projections to the front portion (2), wherein there are also provided edge portions (13 and 14) and that the through opening (25) for the fixing element (17, 17a) is arranged in the edge portion (14).

8. A dashboard according to claim 1 and one or more of the preceding appendant claims characterised in that the fixing element (17b) is fixed to the cover element (5b) by means of at least one clip-like holding element (40b), wherein the desired-rupture location connects the holding element (40b) to the cover element (5b).

9. A dashboard according to claim 1 and one or more of the preceding appendant claims characterised in that the fixing element (7b) has at the cover side a through opening (41b) for the holding element (40b) and that the desired-rupture location (44b) is arranged on the holding element (40b) concealed in the interior of the through opening (41b).

10. A dashboard according to claim 1 and one or more of the preceding appendant claims characterised in that the holding element (40b) is mushroom-shaped and that the stem-like intermediate portion (45b) carrying the head (43b) of the holding element (40b) has the desired-rupture location (44b).

## Revendications

1. Tableau de bord à coussin d'air passager pour un véhicule automobile, au moins un compartiment à coussin d'air (4), recevant le module de coussin d'air, étant disposé dans une partie avant (2, 2b), et un élément formant couvercle (5, 5a), qui habille le compartiment à coussin d'air (4), étant prévu, et étant maintenu, côté tableau de bord, à l'aide d'au moins un élément de fixation (17, 17a, 17b), qui présente au moins un point de rupture théorique associé, caractérisé en ce que la partie avant (2, 2b), en matière plastique, présente une ouverture de passage (25) pour chaque élément de fixation (17, 17a, 17b), disposé côté couvercle, et en ce que l'élément de fixation (17, 17a, 17b) comprend deux doigts de maintien (18 respectivement 18a, 19 respectivement 19a, 19b), disposés à distance l'un de l'autre, une traverse (21), reliant leurs extrémités libres (20) et un doigt d'arrêt (22, 22b), présentant un cran d'arrêt (23, 23b), s'étendant depuis la tranverse (21) parallèlement entre les doigts de maintien (18 respectivement 18a, 19 respectivement 19a, 19b), et en ce qu'une surface d'arrêt correspondante (24, 24a, 24b) est disposée côté tableau de bord.

2. Tableau de bord selon la revendication 1, caractérisé en ce que les points de rupture théorique (30 respectivement 30a à 33a, 39a) relient directement d'une seule pièce, l'élément de fixation (17, 17a) à l'élément formant couvercle (5, 5a).

3. Tableau de bord selon la revendication 1 ou l'une ou plusieurs des revendications précédentes caractérisé en ce que plusieurs éléments de fixation (17, 17a) sont disposés sur l'élément formant couvercle (5, 5a) et en ce que leurs ouvertures de passage (25) sont disposées au bord du compartiment à coussin d'air (4).

4. Tableau de bord selon la revendication 1 ou l'une ou plusieurs des revendications précédentes, caractérisé en ce que les points de rupture théorique (30 a 33 respectivement 30a à 33a, 39a) sont disposés sur les doigts de maintien (18, 18a respectivement 19, 19a).

5. Tableau de bord selon la revendication 1 ou l'une ou plusieurs des revendications précédentes, caractérisé en ce que les doigts de maintien (18, 19) présentent une section transversale en forme de L et en ce que les points de rupture théorique (30 a 31) sont disposés sur chaque branche (27, 28) du doigt de maintien (18, 19) de section transversale en forme de L.

6. Tableau de bord selon la revendication 1 ou l'une ou plusieurs des revendications précédentes, caractérisé en ce que les doigts de maintien (18a, 19a) ont une section transversale en forme de U et en ce qu'un dos (38a) et un côté (28a) sont disposés en forme de U et en ce que des points de rupture théorique (30a a 33a et 39a) sont prévus en conséquence.

7. Tableau de bord selon la revendication 1 ou l'une ou plusieurs des revendications précédentes, caractérisé en ce qu'en vue d'un logement affleurant de l'élément formant couvercle (5, 5a), des pièces de paroi (7, 7a) du compartiment a coussin d'air (4), présentant des talons (11, 12) formant des saillies, se prolongent par la partie avant (2), des parties de bordure (13 et 14) étant prévues, et en ce que l'ouverture de passage (25) pour l'élément de fixation (17, 17a) est disposée dans la partie de bordure (14).

8. Tableau de bord selon la revendication 1 ou l'une ou plusieurs des revendications précédentes, caractérisé en ce que l'élément de fixation (17b) est fixé à l'aide d'au moins un élément de maintien en forme de clip (40b) à l'élément formant couvercle (5b), le point de rupture théorique reliant l'élément de maintien (40b) à l'élément formant couvercle (5b).

9. Tableau de bord selon la revendication 1 ou l'une ou plusieurs des revendications précédentes, caractérisé en ce que l'élément de fixation (17b) présente, coté couvercle, une ouverture de passage (41b) pour l'élément de maintien (40b) et en ce que le point de rupture théorique (44b) est disposé sur l'élément de maintien (40b) caché à l'intérieur de l'ouverture de passage (41b).

10. Tableau de bord selon la revendication 1 ou l'une ou plusieurs des revendications précédentes, caractérisé en ce que l'élément de maintien (40b) a une forme de champignon et en ce que la pièce intermédiaire (45b), en forme de pied portant la tète (43b) de l'élément de maintien (40b), présente le point de rupture théorique (44b).
